# EUROPÄISCHE PATENTSCHRIFT

(11) **EP 1 337 375 B1**
(45) Veröffentlichungstag und Bekanntmachung des Hinweises auf die Patenterteilung: **11.10.2006**
(21) Anmeldenummer: 01933456.4
(22) Anmeldetag: 18.05.2001
(51) Int. Cl.: B23K 26/14

(54) **VORRICHTUNG FÜR EINEN LASER-HYBRID-SCHWEISSPROZESS**
DEVICE FOR A LASER-HYBRID WELDING PROCESS
DISPOSITIF DESTINE A UN PROCEDE DE SOUDURE HYBRIDE

(30) Priorität: 16.11.2000 AT 19362000
(43) Veröffentlichungstag der Anmeldung: 27.08.2003
(60) Teilanmeldung: 05013546.6
(73) Patentinhaber: Fronius International GmbH, 4643 Pettenbach (AT)
(72) Erfinder: STAUFER, Herbert, A-4470 Enns (AT); RÜHRNÖSSL, Manfred, A-4030 Linz (AT); MIESBACHER, Gerhard, A-4600 Thalheim bei Wels (AT); HUBINGER, Manfred, A-4550 Kremsmünster (AT); HABERLER, Wolfgang, A-4655 Vorchdorf (AT); BERGER, Ewald, A-4600 Wels (AT)
(74) Vertreter: Secklehner, Günter
(86) Internationale Anmeldenummer: PCT/AT2001/000157
(87) Internationale Veröffentlichungsnummer: WO 2002/040211

(56) Entgegenhaltungen:
- EP-A- 0 618 037
- WO-A-00/24543
- DE-C- 19 627 803
- US-A- 5 814 786
- US-A- 5 981 901

## Beschreibung

Die Erfindung betrifft eine Vorrichtung, insbesondere einen Laser-Hybrid-Schweißkopf, für einen Laser-Hybrid-Schweißprozeß, wie diese in Anspruch 1 beschrieben ist. Eine Vorrichtung gemäß dem Oberbegriff des Anspruches 1 ist aus der DE 196 27 803 C zu entnehmen.

Es sind bereits Vorrichtungen, insbesondere Laser-Hybrid-Schweißköpfe, für einen Laser-Hybrid-Schweißprozeß bekannt, bei denen an zumindest einer Montageplatte ein Laser bzw. eine Laseroptik oder eine optische Fokussiereinheit und ein Schweißbrenner angeordnet sind. Dem Laser bzw. der optischen Fokussiereinheit ist dabei eine Crossjet-Leitvorrichtung zur Bildung eines Crossjets zugeordnet, wobei die Crossjet-Leitvorrichtung über zumindest eine Zuleitung und eine Ableitung mit einer Druckluftversorgungsanlage verbunden ist. Durch den sogenannten Crossjet werden die entstehenden Schweißspritzer während des Schweißprozesse von der Optik des Lasers bzw. der Laseroptik oder der optischen Fokussiereinheit ferngehalten. Die Anordnung der Zuleitung und der Ableitung erfolgt dabei beiderseits des Lasers bzw. der Laseroptik oder der optischen Fokussiereinheit. Bei einem Schweißprozeß mit einer derartigen Vorrichtung wird durch den voreilenden Laser bzw. der Laseroptik oder der optischen Fokussiereinheit die Oberfläche des Werkstückes erwärmt oder durch entsprechende Fokussierung des Fokuspunktes unterhalb der Oberfläche des Werkstückes bereits ein Aufschmelzen bzw. eine Einbrandtiefe durch den Laserstrahl erreicht, wobei durch den nachfolgenden Lichtbogen-Schweißprozeß eine weitere Vergrößerung der Einbrandtiefe sowie eine Bildung einer Schweißraupe durch Zufuhr eines Schweißdrahtes bzw. eines Zusatzmaterials durchgeführt wird.

Nachteilig ist hierbei, daß durch beidseitige Zuführung der Zuleitung und der Ableitung ein erheblicher Platzbedarf vorhanden ist, sodaß die Baugröße eines derartigen Laser-Hybrid-Schweißkopfes wesentlich vergrößert wird.

Weiters sind Vorrichtungen zur Bildung eines Crossjets bekannt, bei denen beiderseits des Lasers bzw. der Laseroptik oder der optischen Fokussiereinheit ein Austrittselement und ein Eintrittselement für eine zugeführte Druckluft angeordnet sind, sodaß ein entsprechender Crossjet, also eine Luftströmung, zwischen dem Austrittselement und dem Eintrittselement zur Aufnahme loser Metallteile gebildet werden kann.

Nachteilig ist hierbei, daß durch einen derartigen Aufbau eine großflächige Ausbildung des Crossjets notwendig ist, sodaß ein sehr hoher Unterdruck im Bereich des Crossjets entsteht und somit dieser einen großen Abstand zu einem Schweißprozeß mit einer Schutzgasatmosphäre haben muß, um diese nicht anzusaugen.

In den Dokumenten US 5 981 901 A, US 5 814 786 A und EP 0 618 037 A sind Verfahren und Vorrichtungen zum Laserschweißen beschrieben, bei denen eine Crossjet-Leitvorrichtung zum Schutz gegen Schweißspritzer eingesetzt wird. Die Crossjet-Leitvorrichtung wird durch ein längliches Gehäuse gebildet, wobei an einer Seite des Gehäuses eine Druckluftversorgungsanlage zur Zuführung von Druckluft angeordnet ist und somit im inneren ein Crossjet gebildet wird, der an der gegenüberliegenden Seite des Gehäuses aus dem Gehäuse austritt. Weiters weist das Gehäuse eine durchgehende Öffnung für einen sich durch die Öffnung erstreckenden Laserstrahl auf.

Weiters ist aus der WO 00/24 543 A ein Laser-Hybrid-Schweißkopf bekannt, bei dem der Laser im Zentrum angeordnet ist. Beidseits des Lasers ist über eine gemeinsame Befestigungsschiene jeweils ein Schweißbrenner angeordnet, der über die Befestigungsschiene verstellbar ist.

Der Erfindung liegt die Aufgabe zugrunde, eine Vorrichtung, insbesondere einen Laser-Hybrid-Schweißkopf, für einen Laser-Hybrid-Schweißprozeß sowie eine Crossjet-Leitvorrichtung zu schaffen, bei dem eine kompakte Baugröße und ein einfacher Aufbau des Laser-Hybrid-Schweißkopfes und der Crossjet-Leitvorrichtung geschaffen wird.

Die Aufgabe der Erfindung wird dadurch gelöst, daß die Zuleitung und die Ableitung der Druckluft für den Crossjet zwischen den beiden Komponenten, insbesondere dem Laser bzw. der Laseroptik oder der optischen Fokussiereinheit und den Elementen des Schweißbrenners oder der Zufuhrvorrichtung für den Schweißdraht, angeordnet sind, wie dies im Kennzeichenteil des Anspruches 1 beschrieben ist. Vorteilhaft ist hierbei, daß durch die spezielle Ausbildung des Laser-Hybrid-Schweißkopfes erreicht wird, daß keinerlei Leitungen um die einzelnen Komponenten herum und keinerlei Leitungen bis in den Bereich des Schweißprozesses angeordnet sind, da diese alle auf der gegenüberliegenden Seite mit den Komponenten verbunden werden. Damit wird erreicht, daß ein Hängenbleiben des Laser-Hybrid-Schweißköpfes an einem Gegenstand unterbunden wird, da keinerlei abstehende Leitungen um die Komponenten angeordnet sind. Ein wesentlicher Vorteil liegt dann, daß der Laser-Hybrid-Schweißkopf ohne Veränderung des Roboters, insbesondere dessen programmierte Laufbahn, spiegelbildlich eingesetzt werden kann, da auf keine abstehenden Leitungen oder. Teile acht genommen werden muß, da der Laser-Hybrid-Schweißkopf symmetrisch zur Befestigung mit dem Roboter, insbesondere mit dem Manipulator des Roboterarms, aufgebaut ist, sodaß durch die spezielle Ausgestaltung der Laser-Hybrid-Schweißkopf nunmehr auch bei schwer zugänglichen Stellen eingesetzt werden kann.

Weitere vorteilhafte Ausgestaltungen sind in den Ansprüchen 2 bis 13 beschrieben. Die sich daraus ergebenden Vorteile sind der Beschreibung zu entnehmen.

Es kann auch vorgesehen sein, daß in einem Gehäuse der Crossjet-Leitvorrichtung eine durchgehende Öffnung für einen sich durch die Öffnung erstreckenden Laserstrahl angeordnet ist, wobei in den Stirnflächen der Öffnung ein Austrittskanal und ein gegenüberliegender Eintrittskanal für die Druckluft, insbesondere für den Crossjet bzw. einer Crossjetstrahlung, angeordnet ist. Vorteilhaft ist hierbei, daß durch eine derartige Ausbildung des Crossjets mit der Crossjet-Leitvorrichtung ein geschlossenes System innerhalb des Gehäuses erzeugt wird, wodurch die Crossjetstrahlung nur innerhalb der Öffnung auftritt und somit keinerlei bzw nur mehr geringe Luftströme außerhalb dieser Öffnung erzeugt werden. Damit kann ein sehr geringer Abstand des Crossjets bzw. der Crossjet-Leitvorrichtung zum Schweißprozeß; insbesondere zum Lichtbogen-Schweißprozeß, gebildet werden, sodaß die Baugröße des Laser-Hybrid-Schweißkopfes wesentlich verringert wird und somit das Handling des Laser-Hybrid-Schweißkopfes wesentlich verbessert wird.

Weiters kann vorgesehen werden, daß der Brenner bzw. der Schweißbrenner aus mehreren einzelnen Modulen aufgebaut ist, wobei zumindest ein Modul, insbesondere der Brennerkörper, auf die unterschiedlichsten Fügeprozesse, insbesondere auf einen Schweißprozeß oder einem Lötprozeß, umrüstbar ist. Vorteilhaft ist hierbei, daß ohne großen Aufwand der Laser-Hybrid-Schweißprozeß an die verschiedensten Fügeverfahren, wie das Schweißen oder Lö ten, angepaßt werden kann. Ein weiterer wesentlicher Vorteil liegt auch darin, daß durch die spezielle Ausbildung des Laser-Hybrid-Schweißkopfes eine Automatisierung beim Wechsel des Brennerkörpers auf ein anderes Schweißverfahren erreicht wird.

Zum besseren Verständnis der Erfindung wird diese anhand der in den nachfolgenden Figuren gezeigten Ausführungsbeispiele näher erläutert.

Es zeigen:
- Fig. 1: einen Aufbau eines erfindungsgemäßen Laser-Hybrid-Schweißkopfes in Seitenansicht und vereinfachter, schematischer Darstellung;
- Fig. 2: eine Stirnansicht eines Profils für den Laser-Hybrid-Schweißkopf in vereinfachter, schematischer Darstellung;
- Fig. 3: eine Draufsicht auf eine Crossjet-Leitvorrichtung für den Laser-Hybrid-Schweißkopf in vereinfachter, schematischer Darstellung;
- Fig. 4: einen Schnitt durch die Crossjet-Leitvorrichtung gemäß den Linien IV-IV in Fig. 3 in vereinfachter, schematischer Darstellung;
- Fig. 5: einen weiteren Schnitt durch die Crossjet-Leitvorrichtung gemäß den Linien V-V in Fig. 3 in vereinfachter, schematischer Darstellung;
- Fig. 6: eine Draufsicht auf ein weiteres Ausführungsbeispiel des Laser-Hybrid-Schweißkopfes in vereinfachter, schematischer Darstellung;
- Fig. 7: ein Ausführungsbeispiel für den Aufbau des Laser-Hybrid-Schweißkopfes, in vereinfachter, schematischer Darstellung;
- Fig. 8: das Ausführungsbeispiel des Laser-Hybrid-Schweißkopfes gemäß Fig. 7 mit abgehobener Verdeckplatte;
- Fig. 9: ein weiteres Ausführungsbeispiel des Laser-Hybrid-Schweißkopfes für ein Laser-Lötverfahren.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

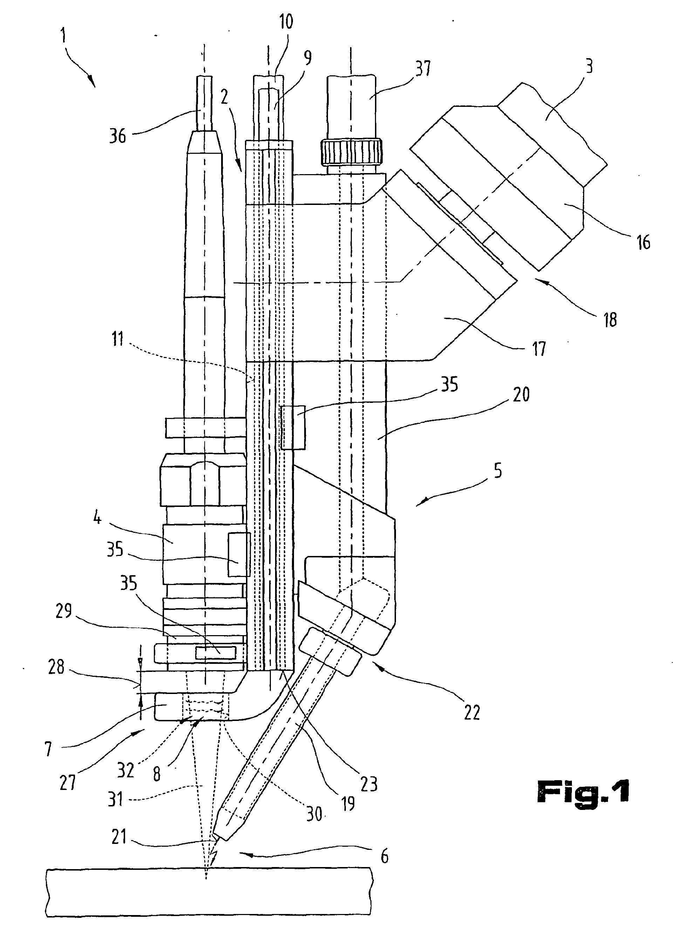

In den Fig. 1 bis 5 ist ein Ausführungsbeispiel für eine Vorrichtung, insbesondere ein Laser-Hybrid-Schweißkopf 1, und ein speziell ausgebildetes Montageelement 2 zur Montage der einzelnen Komponenten des Laser-Hybrid-Schweißkopfes 1 gezeigt.

Bei dem erfindungsgemäßen Laser-Hybrid-Schweißkopf 1 werden handelsübliche, aus dem Stand der Technik bekannte Elemente bzw. Baugruppen in spezieller Kombination zueinander angewandt bzw. eingesetzt. Dabei sind an dem Montageelement 2, das mit einem Roboter, insbesondere einem Roboterarm 3, wie schematisch angedeutet, verbunden wird, ein Laser 4 bzw. eine Laseroptik oder eine optische Fokussiereinheit und Elemente eines Schweißbrenners 5 für einen Lichtbogen-Schweißprozeß 6, wie schematisch angedeutet, oder eine Zufuhrvorrichtung für einen Schweißdraht bzw. eine Elektrode sowie eine Crossjet-Leitvorrichtung 7 zur Bildung eines Crossjets 8, die über zumindest eine Zuleitung 9 und eine Ableitung 10 mit einer Druckluftversorgungsanlage - nicht dargestellt - verbunden ist, angeordnet.

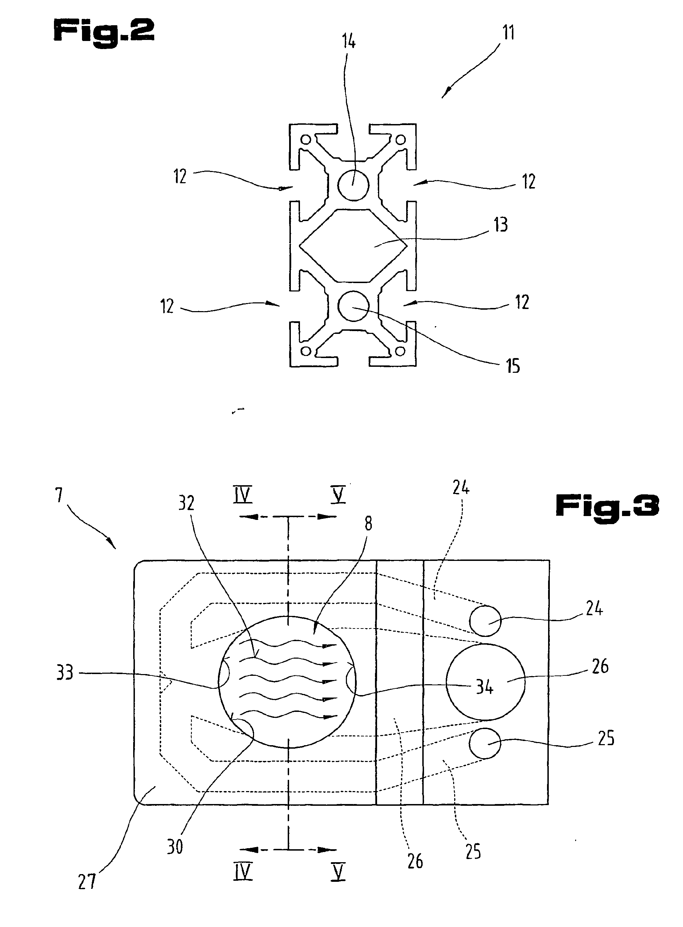

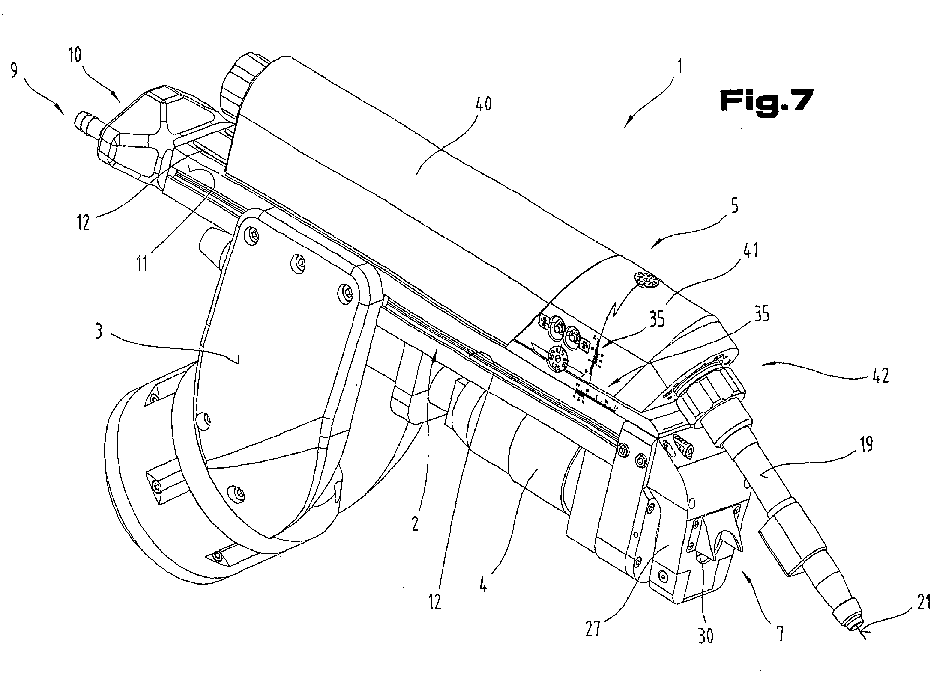

Bei dem erfindungsgemäßen Laser-Hybrid-Schweißkopf 1 ist das Montageelement 2 durch ein Profil 11, entsprechend der Darstellung in Fig. 2, mit Befestigungsnuten 12 für die Komponenten des Laser-Hybrid-Schweißkopfes 1 gebildet. Das Profil 11 ist derart ausgebildet, daß dieses einen im Zentrum verlaufenden, durchgehenden Kanal 13, der bevorzugt die Ableitung 10 ausbildet bzw. mit dieser verbunden ist, aufweist und parallel zu diesem Kanal 13 zwei weitere Kanäle 14, 15, die bevorzugt die Zuleitungen 9 ausbilden bzw. mit diesen verbunden sind, angeordnet sind. Dadurch wird erreicht, daß die Zuleitung 9 und die Ableitung 10 der zugeführten Druckluft für den Crossjet 8, wie schematisch dargestellt, zwischen den beiden Komponenten, insbesondere dem Laser 4 bzw. der Laseroptik oder der optischen Fokussiereinheit und den Elementen des Schweißbrenners 5, angeordnet sind, wobei in dem dargestellten Ausführungsbeispiel der Fig. 1 und 2 nunmehr die Zuleitung 9 und die Ableitung 10 in dem Montageelement 2, insbesondere in dem Profil 11, integriert sind, wodurch die Zuführung und Abführung der Druckluft für den Crossjet 8 auf einer Seite der Crossjet-Leitvorrichtung 7 erfolgt. In dem anschließend beschriebenen bzw. gezeigten Ausführungsbeispiel der Fig. 6 sind die Zuleitung 9 und die Ableitung 10 jedoch nicht mehr in dem Montageelement 2 bzw. in dem Profil 11 integriert, sondern sind parallel verlaufend zum Profil 11 angeordnet, wobei wiederum diese zwischen den beiden Komponenten, insbesondere dem Laser 4 und dem Schweißbrenner 5, angeordnet sind. Bei diesem Ausführungsbeispiel - gemäß Fig. 6 - weißt auch das Profil 11 keinerlei innenliegenden Kanäle 13 bis 15 auf.

Damit eine optimale Befestigung des Profils 11 mit einem Manipulator 16 eines Roboters, insbesondere des Roboterarms 3, erreicht wird, ist das Profil 11 über eine Befestigungsvorrichtung 17 mit dem Manipulator 16 des Roboters verbunden, wie dies die Fig. 1, zeigt. Dabei ist zwischen dem Manipulator 16 des Roboters, insbesondere des Roboterarms 3, und dem Profil 11 eine Abschaltvorrichtung 18 angeordnet. Diese Abschaltvorrichtung 18 dient dazu, daß bei entsprechender Druckausübung auf den Laser-Hybrid-Schweißkopf 1, wie dies beispielsweise bei einem Auflaufen des Laser-Hybrid-Schweißkopfes 1 auf einen Gegenstand der Fall ist, über die Abschaltvorrichtung 18 der Laser-Hybrid-Schweißkopf 1 entsprechend ausweichen kann, wobei zur Aktivierung der Abschaltvorrichtung 18 ein definierter Kraftaufwand notwendig ist. Der wesentliche Vorteil einer derartigen Abschaltvorrichtung 18 liegt darin, daß der Laser-Hybrid-Schweißkopf 1 in einer definierten Lage bzw. Position gehalten wird, wobei bei Auswirkung einer definierten Kraft auf den Laser-Hybrid-Schweißkopf 1 dieser über die Abschaltvorrichtung 18 ausweicht, wobei nach der Ausübung der Kraft der Laser-Hybrid-Schweißkopf 1 wieder in die ursprüngliche Lage bzw. Position über die Abschaltvorrichtung 18 zurückgeführt wird.

Die Elemente des Schweißbrenners 5 sind durch einen Brennerkörper 19 und einem Befestigungskörper 20, in denen sämtliche Bauteile für einen handelsüblichen Brenner integriert sind, gebildet. Der Schweißbrenner 5 ist durch einen MIG/MAG-Schweißbrenner zur Bildung eines MIG/MAG-Schweißprozesses, also eines Lichtbogen-Schweißprozesses 6, ausgebildet, wobei lediglich die einzelnen Elemente des Schweißbrenners 5 gegenüber einen aus dem Stand der Technik bekannten Brenner derart verändert wurden, daß eine einfach Befestigung und Verstellung des Befestigungskörpers 20 am Profil 11 ermöglicht wird und über den Brennerkörper 19 eine sichere Drahtzuführung zum Lichtbogen-Schweißprozeß 6 sowie eine sehr gute Kontaktierung eines zugeführten Schweißdrahtes 21 mit Energie, insbesondere mit Strom und Spannung, erreicht wird.

Weiters ist zwischen dem Brennerkörper 19 und dem Befestigungskörper 20 eine weitere Abschaltvorrichtung 22 angeordnet, sodaß, wie bereits zuvor beschrieben, eine entsprechende Bewegung des Brennerkörpers 19 gegenüber dem Befestigungskörper 20 bei Ausübung einer entsprechenden Kraft auf diesen ermöglicht wird. Dabei ist diese Abschaltvorrichtung 22 derart ausgelegt, daß eine wesentlich geringe Krafteinwirkung auf den Brennerkörper 19 genügt, um eine entsprechende Bewegung auszulösen, als dies bei der Abschaltvorrichtung 18 für den gesamten Laser-Hybrid-Schweißkopf 1 notwendig ist.

Die eingesetzten Abschaltvorrichtungen 18, 22 weisen dabei einen Sensor - nicht dargestellt - auf, der bei Aktivierung der Abschaltvorrichtungen 18, 22 ein entsprechendes Signal erzeugt. Hierzu sind die Abschaltvorrichtungen 18, 22, insbesondere die Sensoren, mit einer Steuervorrichtung für den Roboter und/oder für ein Schweißgerät - nicht dargestellt - verbunden, sodaß bei einer Aktivierung eines oder beider Sensoren dies die Steuervorrichtung erkennen kann. Dadurch kann beispielsweise die weitere Bewegung des Roboterarms 3, also des Laser-Hybrid-Schweißkopfes 1, oder der Schweißprozeß gestoppt werden, wodurch eine Zerstörung der einzelnen Komponenten bei einer entsprechenden Krafteinwirkung verhindert wird.

Bei dem erfindungsgemäßen Laser-Hybrid-Schweißkopf 1 ist die Crossjet-Leitvorrichtung 7 an einer Stirnfläche 23 des Profils 11 befestigt, sodaß bei dem gezeigten Ausführungsbeispiel - gemäß Fig. 1 - die über die Kanäle 14 und 15 zugeführte Druckluft und die über den Kanal 13 abgeführte Druckluft direkt in die Crossjet-Leitvorrichtung 7 übergeht. Dazu sind im Inneren der Crossjet-Leitvorrichtung 7 entsprechende Kanäle 24 bis 26, die aus einem Gehäuse 27 der Crossjet-Leitvorrichtung 7 ausgeführt sind, angeordnet. Diese Kanäle 24 bis 26 werden dabei auf einer Seite des Gehäuses 27 angeordnet, sodaß nur in einem Bereich dieser Seite entsprechende Leitungen, insbesondere die Kanäle 13 bis 15 bzw. die Zuleitung 9 und die Ableitung 10, angeordnet werden müssen.

Die Crossjet-Leitvorrichtung 7 weist bei dem dargestellten Ausführungsbeispiel, wie dies speziell in den Fig. 3 bis 5 dargestellt ist, eine bevorzugt L-förmige Form auf, sodaß sich die Crossjet-Leitvorrichtung 7 bevorzugt in einen definierten Abstand 28 unterhalb des Lasers 4 bzw. der Laseroptik oder der optischen Fokussiereinheit oder eines Schutzglases 29 mit einer entsprechenden Schutzglasüberwachung für den Laser 4 erstreckt bzw. ausgebildet ist. Weiters weist das Gehäuse 27 der Crossjet-Leitvorrichtung 7 eine Öffnung 30 bzw. eine Ausnehmung auf, in der der Crossjet 8 ausgebildet ist, d.h., daß die Crossjet-Leitvorrichtung 7 eine Öffnung 30 aufweist, durch die ein schematisch angedeuteter Laserstrahl 31 des Lasers 4 hindurchstrahlt, wobei in einem Winkel bevorzugt von 90° zum Laserstrahl 31 die Druckluft durch die Öffnung 30 hindurchströmt und somit in der Öffnung 30 eine Crossjetstrahlung 32 ausgebildet wird.

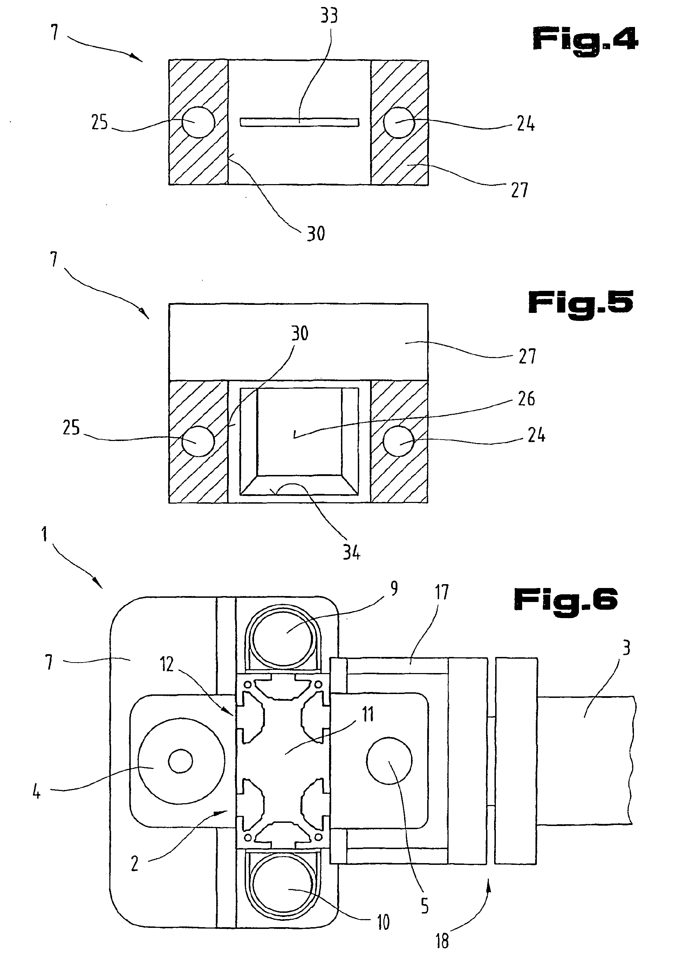

Hierzu ist in den Fig. 3 bis 5 die Crossjet-Leitvorrichtung 7 im Detail dargestellt, wobei in Fig. 3 eine Draufsicht auf das Gehäuse 27 und in den Fig. 4 und 5 jeweils eine Stirnansicht des Gehäuses 27 - gemäß den Schnittlinien IV-IV und V-V in Fig. 3 - dargestellt ist.

Die Crossjet-Leitvorrichtung 7 kann dabei beispielsweise aus einem ein oder mehrteiligen Gußteil oder einem Spritzgußteil aus Aluminium oder Kunststoff gebildet werden. Selbstverständlich ist es möglich, daß jeder beliebige, aus dem Stand der Technik bekannte Aufbau eines Gehäuses 27 verwendet werden kann, wobei lediglich eine entsprechende Ausbildung der Öffnung 30 vorhanden sein muß, wobei die Öffnung 30 im Inneren des Gehäuses mit den Kanälen 24 bis 26 verbunden wird. Im Gehäuse 27 der Crossjet-Leitvorrichtung 7 sind also die Kanäle 24 bis 26 zur Verlängerung der Kanäle 13 bis 15 des Profils 11, also die Verlängerung der Zu- und Ableitungen 9, 10, angeordnet, wobei sich diese in die Öffnung 30 erstrekken und stirnseitig zur Öffnung 30 einen Austrittskanal 33 sowie einen gegenüberliegenden Eintrittskanal 34 ausbilden, d.h., daß in dem Gehäuse 27 der Crossjet-Leitvorrichtung 7 die durchgehende Öffnung 30 für einen sich durch die Öffnung 30 erstreckenden Laserstrahl 31 angeordnet ist, wobei in den Stirnflächen der Öffnung 30 der Austrittskanal 33 und ein gegenüberliegender Eintrittskanal 34 für die Druckluft, insbesondere für den Crossjet 8 bzw. die Crossjetstrahlung 32, angeordnet ist.

Damit wird erreicht, daß die zugeführte Druckluft über den Austrittskanal 33 in die Öffnung 30 ausströmt und an der gegenüberliegenden Seite wieder in den Eintrittskanal 34 einströmt, wodurch die Druckluft einen Luftstrom, insbesondere die Crossjetstrahlung 32, in der Öffnung 30 erzeugt bzw. ausbildet. Dabei kann die Führung der Kanäle 24 bis 26 sowie die Form der Eintritts- und Austrittskanäle 33, 34 beliebig ausgebildet werden und ist nicht auf das dargestellte Ausführungsbeispiel beschränkt. Es muß lediglich gewährleistet sein, daß in der Öffnung 30 der Crossjet-Leitvorrichtung 7 eine Querströmung, also ein sogenannter Crossjet 8, ausgebildet wird.

Vorteilhafterweise ist das Gehäuse 27 derart ausgebildet, daß eine Zu- und Abfuhr der Druckluft an einer Stirn- bzw. Seitenfläche erfolgt. Es ist aber ebenfalls möglich, die Zu- und Abfuhr der Druckluft an unterschiedlichen, insbesondere gegenüberliegenden, Stim- bzw. Seitenflächen des Gehäuses 27 auszuführen.

Weiters ist es möglich, das Gehäuse 27 quaderförmig bzw. L-förmig auszubilden, wobei die Öffnung 30 durch das Gehäuse 27 verläuft und etwa senkrecht auf zwei gegenüberliegende Seitenflächen ausgerichtet ist. Des weiteren kann das Gehäuse 27 einen weiteren Kanal zur Abfuhr zumindest eines Teilstromes der Druckluft aufweisen. Durch die Abfuhr der Druckluft in zumindest zwei Teilströmen kann eine leichtere Abfuhr von Schmutz- bzw. Schweißpartikel erreicht werden.

Die Crossjet-Leitvorrichtung 7, insbesondere der ausgebildete Crossjet 8, hat die Aufgabe, die bei einem Schweißprozeß auftretenden Schweißspritzer von der Optik des Lasers 4 bzw. der Laseroptik oder optischen Fokussiereinheit oder dem vor diesen Komponenten angeordneten Schutzglas 29, wie schematisch angedeutet, fernzuhalten. Dabei ist der Crossjet 8 unterhalb des Lasers 4 bzw. der Laseroptik oder der optischen Fokussiereinheit, also zwischen dem Laser 4 und dem Bereich des durchzuführenden Schweißprozesses des Lasers 4 bzw. des Schweißbrenners 5, angeordnet. Die Crossjet-Leitvorrichtung 7, insbesondere der Crossjet 8, ist derartig ausgebildet, daß von dieser die Crossjetstrahlung 32, insbesondere ein Luftstrom, wie schematisch mit Pfeilen in Fig. 3 angedeutet, erzeugt wird. Der Crossjet 8, insbesondere die Crossjetstrahlung 32, weist dabei bevorzugt eine Strömungsgeschwindigkeit zwischen 100 und 600 m/s und/oder einen Crossjetdruck zwischen 2,5 und 6 bar auf. Dabei kann der Crossjet 8 eine Überschallströmung erzeugen, wobei in der Crossjet-Leitvorrichtung 7 eine sogenannte Lavaldüse ausgebildet ist.

Damit die Crossjetstrahlung 32, insbesondere die Druckluft, aus dem Bereich des Laser-Hybrid-Schweißkopfes 1, insbesondere aus dem Bereich des Lichtbogen-Schweißprozesses 6, abgeleitet werden kann, ist in der Crossjet-Leitvorrichtung 7 ein entsprechender Kanal 26 für die Ableitung der Crossjetstrahlung 32 ausgelegt, d.h., daß die über die Kanäle 24, 25 der Crossjet-Leitvorrichtung 7 erzeugte Crossjetstrahlung 32 in der Öffnung 30 der Crossjet-Leitvorrichtung 7 in den Kanal 26 einströmt und von diesem in den Kanal 13, insbesondere in die Ableitung 10, im Profil 11 weitergeleitet wird, sodaß die von der Crossjetstrahlung 32 aufgenommenen Schweißspritzer, insbesondere die in Richtung des Lasers 4 bzw. der Laseroptik oder optischen Fokussiereinheit geschleuderten Materialien, über die Ableitung 10 aus dem Bereich des Laser-Hybrid-Schweißkopfes 1 geleitet werden. Dabei wird die Ableitung 10 beispielsweise mit einer Absaugvorrichtung verbunden, sodaß ein entsprechender Unterdruck in der Ableitung 10, also ein Absaugen der Crossjetstrahlung 32 aus der Öffnung 30 der Crossjet-Leitvorrichtung 7, geschaffen wird. Damit eine verbesserte Abführung der Crossjetstrahlung 32 über den Eintrittskanal ermöglicht wird, weist der Eintrittskanal 34 ein größeres Volumen als der Austrittskanal 33 auf.

Wesentlich ist bei einem derartigen Laser-Hybrid-Schweißkopf 1, daß die Anordnung des Crossjets 8 in einem bestimmten Abstand zum Lichtbogen-Schweißprozeß 6 erfolgt, da bei diesem eine entsprechende Schutzgasatmosphäre - nicht dargestellt - geschaffen wird, und somit bei zu geringem Abstand der Crossjet-Leitvorrichtung 7 diese Schutzgasatmosphäre durch einen um den Crossjet 8 entstehenden Unterdruck in Richtung des Crossjets 8 gezogen wird. Dadurch könnte der Lichtbogen-Schweißprozeß 6 nicht mehr in der notwendigen Schutzgasatmosphäre durchgeführt werden.

Durch eine derartige Ausbildung des Crossjets 8 wird mit der Crossjet-Leitvorrichtung 7 ein fast geschlossenes System innerhalb des Gehäuses 27 erzeugt, sodaß keinerlei bzw. nur mehr geringe Luftströme außerhalb der Öffnung 30 der Crossjet-Leitvorrichtung 7 gebildet werden. Damit kann ein sehr geringer Abstand des Crossjets 8 bzw. der Crossjet-Leitvorrichtung 7 zum Schweißprozeß, insbesondere zum Lichtbogen-Schweißprozeß 6, gebildet werden, sodaß die Baugröße des Laser-Hybrid-Schweißkopfes 1 wesentlich verringert wird und somit das Handling des Laser-Hybrid-Schweißkopfes 1 wesentlich verbessert wird. Selbstverständlich ist es möglich, daß eine derartige Crossjet-Leitvorrichtung 7 auch bei anderen Anwendungen, wie beispielsweise einem reinen Laser-Schweißprozeß, zum Schutz des Lasers 4 bzw. der Laseroptik oder der optischen Fokussiereinheit vor Rauch oder losen Metallteilen eingesetzt werden kann. Der wesentliche Vorteil liegt darin, daß die Crossjetstrahlung 32 nur innerhalb der Öffnung 30 auftritt und somit keinerlei bzw. nur mehr geringe Luftströme außerhalb dieser Öffnung 30 erzeugt werden.

Durch die spezielle Ausbildung der Crossjet-Leitvorrichtung 7 wird weiters erreicht, daß nur eine eingeschränkte Angriffsfläche für den Laser 4 geschaffen wird, da über die Crossjet-Leitvorrichtung 7, insbesondere über das Gehäuse 27, selbst, die losen Metallteile bzw. Schweißspritzer oder der Rauch abgehalten werden und somit nur in dem Bereich der Öffnung 30, durch den der Laserstrahl 31 hindurchstrahlt, diese Teile zum Laser 4 bzw. der Laseroptik oder der optischen Fokussiereinheit vordringen können. Damit wird bereits ein Großteil der Teile von dem Gehäuse 27 abgehalten, wobei die restlichen Teile über die Crossjetstrahlung 32 in der Öffnung 30 gefördert werden. Somit ist ein Vordringen von Schweißspritzern zum Laser 4 fast unmöglich. Wesentlich ist hierbei auch, daß durch die Einschränkung dieses Raumes auf die Öffnung 30 nunmehr eine einfache Ausbildung und eine einfache Erzeugung des Crossjets 8 ermöglicht wird, da dieser nicht mehr großflächig wirken muß, wie dies bei offenen Systemen aus dem Stand der Technik der Fall ist. Hierzu ist es beispielsweise möglich, daß die Crossjet-Leitvorrichtung 7 bzw. das Gehäuse 27 derart ausgebildet ist, daß diese zumindest teilweise den zugeordneten Laser 4 bzw. die Laseroptik oder die optische Fokussiereinheit umschließt bzw. der Abstand 28 von dem Gehäuse 27 zum Laser 4 durch eine entsprechende Ausbildung des Gehäuses 27 geschlossen wird, sodaß auch ein seitliches Eindringen von Schmutz oder anderen Fremdkörpern zu den zu schützenden Teilen, wie dem Laser 4 bzw. der Laseroptik oder der optischen Fokussiereinheit, unterbunden werden kann und nur mehr ein Zugang über die Öffnung 30 möglich ist. Dabei ist es möglich, daß in diesem Bereich, also zwischen dem Laser 4 und der Crossjet-Leitvorrichtung 7 ein Überdruck ausgebildet wird, wobei dieser Überdruck von der Zuleitung 9 abgezweigt wird. Dies kann in einfacher Form derartig erfolgen, daß zumindest einer der Kanäle 24 oder 25 zumindest eine Bohrung in Richtung des Lasers 4 aufweist, wodurch ein Teil der zugeführten Druckluft über diese Bohrung in Richtung des Lasers 4 austreten kann und somit in diesem Bereich oberhalb des Gehäuses 27 ein entsprechender Überdruck ausgebildet werden kann.

Weiters weist der erfindungsgemäße Laser-Hybrid-Schweißkopf 1 eine oder mehrere Anzeigeeinheiten 35 - wie schematisch angedeutet - auf, über die die Positionen der Komponenten zueinander angezeigt werden, d.h., daß ausgehend von einer vordefinierten Position bzw. Ausgangsstellung die Komponenten, insbesondere der Laser 4 und der Schweißbrenner 5, diese in X-, Y- und Z-Richtung zueinander verstellt werden können, wobei diese Verstellvorgänge über die Anzeigeeinheit 35 angezeigt bzw. abgelesen werden kann, sodaß jederzeit eine abermalige Einstellung der beiden Komponenten zueinander wiederholt werden kann. Damit kann der Laser-Hybrid-Schweißkopf 1 für die unterschiedlichen Schweißvorgänge verstellt werden, wobei in einfacher Form eine Rückstellung auf die entsprechenden Ausgangswerte möglich ist.

Dabei ist es beispielsweise möglich, daß die einzelnen Komponenten, insbesondere der Laser 4 und der Schweißbrenner 5, mit einer aus dem Stand der Technik bekannten elektronischen Aufnahmevorrichtung bzw. Meßvorrichtung für mechanische Verstellwege - nicht dargestellt - gekoppelt sind, wobei diese Werte der Aufnahmevorrichtung über die Anzeigeeinheit 35 angezeigt werden können. Hierzu ist es möglich, daß die Anzeigeeinheit 35 direkt am Laser-Hybrid-Schweißkopf 1 oder beispielsweise in einem zentralen Steuergerät angeordnet ist, wobei hierzu die Aufnahmevorrichtung die Werte über Leitungen an die Anzeigeeinheit 35 oder eine Steuervorrichtung übersendet. Somit wird erreicht, daß jederzeit eine Reproduzierung einer Einstellung des Laser-Hybrid-Schweißkopfes 1 auf elektronischem Wege möglich ist. Selbstverständlich ist es möglich, daß bei entsprechender Befestigung der einzelnen Komponenten auf einem elektronischen Verstellsystem die Verstellung automatisiert werden kann, sodaß lediglich nur mehr der Wert der Verschiebung eingestellt werden muß, worauf über das entsprechende Verstellsystem die Verstellung vorgenommen wird.

Der Vollständigkeit halber wird noch erwähnt, daß die einzelnen Komponenten über Leitungen mit den entsprechenden Versorgungsgeräten verbunden werden, wie dies schematisch angedeutet wurde. Hierzu wird der Laser 4 über eine Versorgungsleitung 36 mit einer entsprechenden Energiequelle verbunden. Weiters wird der Schweißbrenner 5 über ein Schlauchpaket 37 mit einem Schweißgerät verbunden. Es ist auch möglich, daß anstelle der Energiequelle für den Laser 4 dieser direkt mit dem Schweißgerät verbunden wird, wobei die Energie für den Laser 4 und dem Schweißbrenner 5 vom Schweißgerät geliefert wird.

Durch die spezielle Ausbildung des Laser-Hybrid-Schweißkopfes 1 wird erreicht, daß keinerlei Leitungen bis in den Bereich des Schweißprozesses angeordnet sind, da diese alle auf der gegenüberliegenden Seite mit den Komponenten verbunden werden. Damit wird erreicht, daß ein Hängenbleiben des Laser-Hybrid-Schweißkopfes 1 an einer Leitung bzw. einem Gegenstand unterbunden wird, da keinerlei abstehende Leitungen um die Komponenten angeordnet sind. Somit wird auch die Möglichkeit geschaffen, daß der Laser-Hybrid-SchweiBkopf 1 ohne Veränderung des Roboters, insbesondere dessen programmierte Laufbahn, spiegelbildlich eingesetzt werden kann, da auf keine abstehenden Leitungen oder Teile acht genommen werden muß, sodaß durch die spezielle Ausgestaltung der Laser-Hybrid-Schweißkopf 1 nunmehr auch bei schwer zugänglichen Stellen eingesetzt werden kann.

In dem weiteren Ausführungsbeispiel - gemäß Fig. 6 - ist der Laser-Hybrid-Schweißkopf 1 in Draufsicht dargestellt, wobei wiederum im Zentrum das Profil 11 angeordnet ist. An diesem Profil 11 sind die einzelnen Komponenten, wie bereits zuvor beschrieben, befestigt.

Wie bereits zuvor erwähnt, sind die Zuleitung 9 und die Ableitung 10 jedoch nicht mehr in dem Montageelement 2 bzw. in dem Profil 11 integriert, sondern sind parallel verlaufend zum Profil 11 angeordnet bzw. an diesem befestigt, wobei diese zwischen den beiden Komponenten, insbesondere dem Laser 4 und dem Schweißbrenner 5, angeordnet sind bzw. verlaufen. Bei diesem Ausführungsbeispiel weißt auch das Profil 11 keinerlei innenliegenden Kanäle 13 bis 15 auf.

Weiters wird durch diese Anordnung gewährleistet, daß wiederum ein symmetrischer Aufbau des Laser-Hybrid-Schweißkopfes 1 ohne abstehende Leitungen erzielt wird. Da für die Befestigung der einzelnen Komponenten handelsübliche Befestigungssysteme eingesetzt werden, wird auf eine spezielle Beschreibung des Aufbaus verzichtet, da dieser den zuvor beschriebenen Ausführungsbeispielen in den Fig. 1 bis 5 annähernd gleicht.

Es wird lediglich darauf hingewiesen, daß bei den gezeigten Ausführungsbeispielen der Fig. 1 bis 6 die Montage der Komponenten, insbesondere des Lasers 4 bzw. der Laseroptik oder der optischen Fokussiereinheit und dem Schweißbrenner 5, auf beiden Seiten des Montageelementes 2, insbesondere des Profils 11, erfolgt, wogegen aus dem bekannten Stand der Technik die Laser-Hybrid-Schweißköpfe derartig aufgebaut sind, daß der Laser und der Schweißbrenner nur auf einer Seite einer Montageplatte angeordnet sind, wogegen auf der gegenüberliegenden Seite die Verbindung mit dem Roboter, insbesondere mit dem Roboterarm, erfolgt. Durch eine derartige Anordnung wird ein übermäßig breiter und somit schwer handzuhabender Laser-Hybrid-Schweißkopf 1 geschaffen.

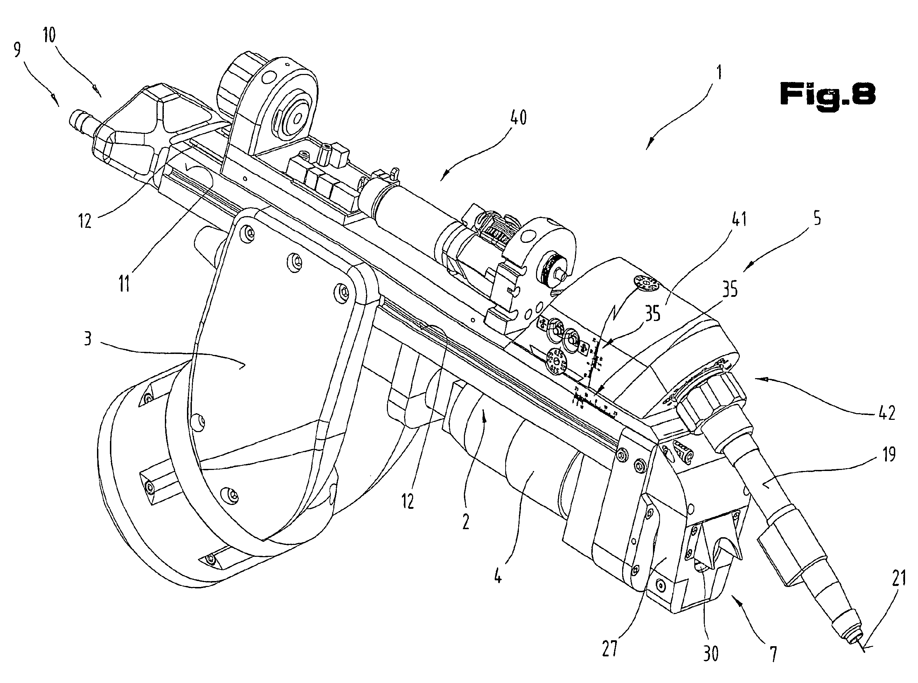

In den Fig. 7 bis 9 ist ein weiteres Ausführungsbeispiel eines modularen Laser-Hybrid-Brenners bzw. eines modularen Laser-Hybrid-Schweißkopfes 1 gezeigt, bei dem an zumindest einem Montageelement 2, insbesondere am Profil 11, Komponenten wie ein Laser 4 bzw. eine Laseroptik oder eine optische Fokussiereinheit und Elemente eines Brenners bzw. eines Schweißbrenners 5 für einen Schweißprozeß angeordnet sind. Weiters weist der modulare Laser-Hybrid-Brenner eine Vorrichtung zur Bildung eines Crossjets (nicht dargestellt), insbesondere die Crossjet-Leitvorrichtung 7, die über zumindest eine Zuleitung 9 und eine Ableitung 10 mit einer Druckluftversorgungsanlage, nicht dargestellt, verbunden ist, auf.

Der Brenner bzw. der Schweißbrenner 5 ist aus mehreren einzelnen Modulen aufgebaut, wobei zumindest ein Modul, insbesondere der Brennerkörper 19, auf die unterschiedlichsten Fügeprozesse, insbesondere auf einen Schweißprozeß oder einen Lötprozeß, umrüstbar ist. Dabei kann durch Austausch des Brennerkörpers 19 dieser nunmehr zur Bildung eines MIG/MAG-Schweißverfahrens, eines TIG/WIG-Schweißverfahrens, eines Doppeldraht-Schweißverfahrens, eines Plasma-Schweißverfahrens oder für ein Laser-Kaltdraht-Löten, ein Laser-Heißdraht-Löten, ein Laser-Schweißen ohne Lichtbogen ausgebildet sein, d.h., daß unterschiedliche Brennerkörper 19 für unterschiedliche Fügeprozesse mit einem Modul des Schweißbrenners 5 verbunden werden können, sodaß mit ein und demselben Laser-Hybrid-Schweißkopf 1 unterschiedliche Verfahren durchgeführt werden können, ohne daß dabei der gesamte Schweißbrenner 5, insbesondere die Module, ausgetauscht werden müssen.

Dadurch wird in vorteilhafter Weise erreicht, daß ein sehr rasches Umrüsten des Laser-Hybrid-Brenners auf die unterschiedlichsten Schweißverfahren möglich ist. Ein besonderer Vorteil liegt vor allem darin, daß der Wechsel des Brennerkörpers 19, aufgrund der modularen Ausbildung automatisiert werden kann, und somit dieser Tausch über einen Werkzeugwechsel, wie dies in der Robotertechnologie üblich ist, vorgenommen werden kann. Dabei hat es sich als besonders vorteilhaft herausgestellt, daß eventuelle zusätzliche Komponenten bzw. Zusatzmodule, wie beispielsweise eine externe Drahtzufuhrvorrichtung oder ein weiterer Schweißbrenner 5 bzw. Brennerkörper 19, nicht dargestellt, bereits am Profil 11 befestigt sind bzw. diese mit dem Brennerkörper 19 verbunden werden, sodaß keine mechanischen Änderungen bzw. Einstellungen mehr vorgenommen werden müssen.

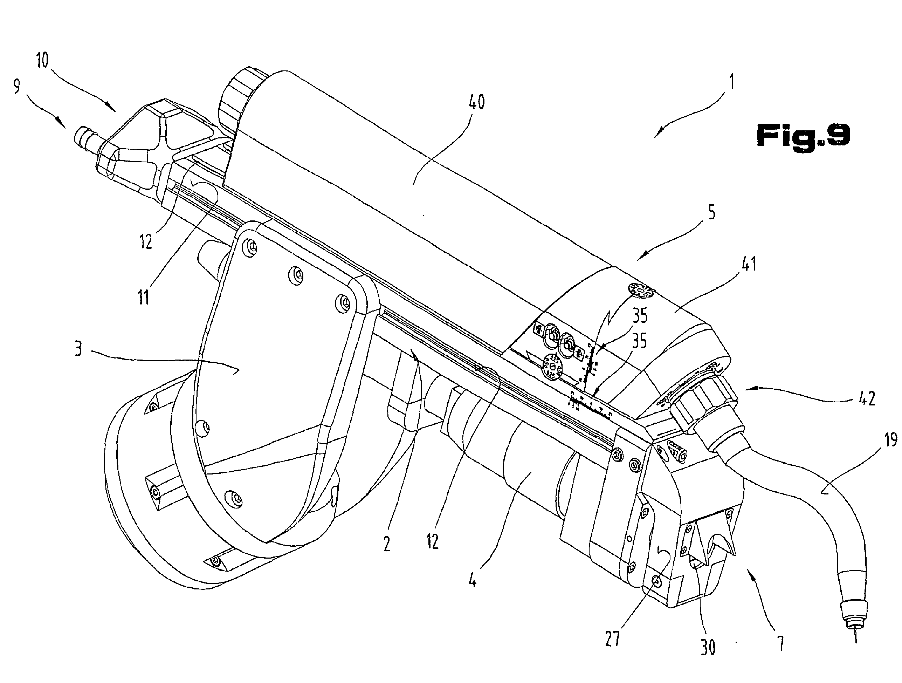

Der Schweißbrenner 5 ist dabei aus einem Antriebsmodul 40, einem Befestigungsmodul 41 und dem Brennerkörper 19 gebildet, wobei weitere Zusatzmodule, wie beispielsweise ein externes Drahtzuführungsmodul, anschließbar sind. Damit ein Wechsel des Brennerkörpers 19 vorgenommen werden kann, ist der Brennerkörper 19 über eine Verbindungsvorrichtung 42, insbesondere über eine Schraubverbindung oder Steckverbindung, mit dem Befestigungsmodul 41 des Schweißbrenners 5 verbunden. Die einzelnen Module, insbesondere das Antriebsmodul 40 und das Befestigungsmodul 41, sind an dem Profil 11 befestigt, wogegen der Brennerkörper 19 am Befestigungsmodul 41 des Schweißbrenners befestigt ist. Somit können bei einem Tausch des Brennerkörpers 19 die Positionen der am Profil 11 befestigten Module bestehen bleiben, sodaß sich die Einstellungen gegenüber dem Laser 5, insbesondere dem Laserstrahl, nicht ändern. Damit wird erreicht, daß die weiteren Brennerkörper 19 in ihrer Länge entsprechend ausgebildet werden können, sodaß jederzeit ein optimaler Schweißprozeß durchgeführt werden kann. Die einzelnen Brennerkörper 19 werden bevorzugt immer mit der gleichen Brennerlänge hergestellt und als Präzisionsbauteil ausgebildet. Hierbei können jedoch die Brennerkörper 19 unterschiedliche Formen aufweisen, wie dies beispielsweise in Fig. 9 ersichtlich ist. Bei dieser Ausführungsform ist der Brennerkörper 19 für einen Lötprozeß konzipiert, wobei die Zuführung des Schweißmaterials, insbesondere des Schweißdrahtes 21, in einem anderen Winkel als für einen Schweißprozeß erfolgt.

Weiters ist es möglich, daß die Zusatzmodule ebenfalls am Profil 11 befestigt werden. Hierzu ist es möglich, daß dabei am Profil entsprechende Befestigungssysteme vormontiert werden, sodaß wiederum eine automatisierte Montage bzw. Demontage möglich ist. Durch die kombinierte Ausbildung des Schweißbrenners 5 für das Löten und das Schweißen ist es nunmehr möglich, daß bei einem Lötprozeß eine Schutzgasatmosphäre aufgebaut werden kann, da sämtliche Zuleitungen hierfür vorhanden sind.

Der Ordnung halber sei abschließend darauf hingewiesen, daß zum besseren Verständnis des Laser-Hybrid-Schweißkopfes 1 dieser bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Laser-Hybrid-Schweißkopf
- 2: Montageelement
- 3: Roboterarm
- 4: Laser
- 5: Schweißbrenner

- 6: Lichtbogen-Schweißprozeß
- 7: Crossjet-Leitvorrichtung
- 8: Crossjet
- 9: Zuleitung
- 10: Ableitung

- 11: Profil
- 12: Befestigungsnut
- 13: Kanal
- 14: Kanal
- 15: Kanal

- 16: Manipulator
- 17: Befestigungsvorrichtung
- 18: Abschaltvorrichtung
- 19: Brennerkörper
- 20: Befestigungskörper

- 21: Schweißdraht
- 22: Abschaltvorrichtung
- 23: Stirnfläche
- 24: Kanal
- 25: Kanal

- 26: Kanal
- 27: Gehäuse
- 28: Abstand
- 29: Schutzglas
- 30: Öffnung

- 31: Laserstrahl
- 32: Crossjetstrahlung
- 33: Austrittskanal
- 34: Eintrittskanal
- 35: Anzeigeeinheit

- 36: Versorgungsleitung
- 37: Schlauchpaket
- 38:
- 39:
- 40: Antriebsmodul

- 41: Befestigungsmodul
- 42: Verbindungsmodul

## Patentansprüche

1. Vorrichtung, insbesondere Laser-Hybrid-Schweißkopf (1), für einen Laser-Hybrid-Schweißprozeß, bei der an zumindest einem Montageelement (2) ein Laser (4) bzw. eine Laseroptik oder eine optische Fokussiereinheit und Elemente eines Schweißbrenners (5) für einen Lichtbogen-Schweißprozeß (6) und/oder einer Zufuhrvorrichtung für einen Schweißdraht (21), sowie eine Vorrichtung zur Bildung eines Crossjets (8), die über zumindest eine Zuleitung (9) und eine Ableitung (10) mit einer Druckluftversorgungsanlage verbunden ist, angeordnet sind, **dadurch gekennzeichnet, daß** die Zuleitung (9) und die Ableitung (10) der Druckluft für den Crossjet (8) zwischen dem Laser (4) bzw. der Laseroptik oder der optischen Fokussiereinheit auf der einen Seite und den Elementen des Schweißbrenners (5) oder der Zufuhrvorrichtung für den Schweißdraht (21) auf der anderen Seite, angeordnet sind.

2. Vorrichtung nach Anspruch 1, **dadurch gekennzeichnet, daß** das Montageelement (2) durch ein Profil (11) mit Befestigungsnuten (12) für die Komponenten des Laser-Hybrid-Schweißkopfes (1) gebildet ist.

3. Vorrichtung nach Anspruch 1 oder 2, **dadurch gekennzeichnet, daß** das Montageelement (2) derart ausgebildet ist, daß dieses einen im Zentrum verlaufenden, durchgehenden Kanal (13), der bevorzugt die Ableitung (10) ausbildet, aufweist und parallel zu diesem Kanal (13) zwei weitere Kanäle (14, 15), die bevorzugt die Zuleitungen (9) ausbilden, angeordnet sind.

4. Vorrichtung nach einem der vorhergehenden Ansprüche, **dadurch gekennzeichnet, daß** das Montageelement (2) mit einem Manipulator (16) eines Roboters über eine Befestigungsvorrichtung (17) verbunden ist.

5. Vorrichtung nach einem der vorhergehenden Ansprüche, **dadurch gekennzeichnet, daß** zwischen den Manipulator (16) des Roboters und dem Montageelement (2) eine Abschaltvorrichtung (18), insbesondere für ein Ausweichen des Laser-Hybrid-Schweißkopfes (1) bei einer Krafteinwirkung, angeordnet ist.

6. Vorrichtung nach einem der vorhergehenden Ansprüche, **dadurch gekennzeichnet, daß** die Elemente des Schweißbrenners (5) durch einen Brennerkörper (19) und einen Befestigungskörper (20) gebildet sind.

7. Vorrichtung nach einem der vorhergehenden Ansprüche, **dadurch gekennzeichnet, daß** zwischen dem Brennerkörper (19) und dem Befestigungskörper (20) eine Abschaltvorrichtung (22), insbesondere für ein Ausweichen des Brennerkörpers (19) bei einer Krafteinwirkung, angeordnet ist.

8. Vorrichtung nach einem der vorhergehenden Ansprüche, **dadurch gekennzeichnet, daß** an einer Stirnfläche (23) des Montageelementes (2), insbesondere des Profils (11), eine Crossjet-Leitvorrichtung (7) befestigt ist.

9. Vorrichtung nach einem der vorhergehenden Ansprüche, **dadurch gekennzeichnet, daß** die Crossjet-Leitvorrichtung (7) in einem Abstand (28) unterhalb des Lasers (4) bzw. der Laseroptik oder der optischen Fokussiereinheit angeordnet ist.

10. Vorrichtung nach einem der vorhergehenden Ansprüche, **dadurch gekennzeichnet, daß** die Crossjet-Leitvorrichtung (7) eine Öffnung (30) aufweist, durch die ein Laserstrahl (31) des Lasers (4) hindurchstrahlt.

11. Vorrichtung nach einem der vorhergehenden Ansprüche, **dadurch gekennzeichnet, daß** auf einer Seite des Montageelementes (2) der Laser (4) bzw. die Laseroptik oder die optische Fokussiereinheit und auf einer anderen, insbesondere gegenüberliegenden, Seite des Montageelementes (2) der Schweißbrenner (5) angeordnet ist.

12. Vorrichtung nach einem der vorhergehenden Ansprüche, **dadurch gekennzeichnet, daß** der Schweißbrenner (5) durch einen MIG/MAG-Schweißbrenner zur Durchführung eines MIG/MAG-Schweißprozesses gebildet ist.

13. Vorrichtung nach einem der vorhergehenden Ansprüche, **dadurch gekennzeichnet, daß** die Crossjet-Leitvorrichtung (7), in dem ein Crossjet (8) ausgebildet ist, ein Gehäuse (27) aufweist, welches derart ausgebildet ist, daß es zumindest teilweise den Laser (4) bzw. die Laseroptik oder die optische Fokussiereinheit umschließt bzw. abdeckt.

## Claims

1. Apparatus, in particular a laser hybrid welding head (1), for a laser hybrid welding process, in which a laser (4) and laser optics or an optical focussing unit and elements of a welding torch (5) for an arc welding process (6) and/or a feed device for a welding wire (21), as well as a device for generating a cross jet (8) connected by at least an incoming line (9) and an outgoing line (10) to a compressed air supply system, are mounted on at least one mounting element (2), **characterised in that** the incoming line (9) and the outgoing line (10) carrying compressed air for the cross jet (8) are disposed between the laser (4) and the laser optics or the optical focussing unit on the one hand and the elements of the welding torch (5) or feed device for the welding wire (21) on the other hand.

2. Apparatus as claimed in claim 1, **characterised in that** the mounting element (2) is a section (11) with mounting grooves (12) for the components of the laser hybrid welding head (1).

3. Apparatus as claimed in claim 1 or 2, **characterised in that** the mounting element (2) has an end-to-end passage (13) extending through the centre, which preferably constitutes the outgoing line (10), and two other passages (14, 15) disposed parallel with this passage (13), which preferably constitute incoming lines (9).

4. Apparatus as claimed in one of the preceding claims, **characterised in that** the mounting element (2) is connected to a manipulator (16) of a robot via a fixing device (17).

5. Apparatus as claimed in one of the preceding claims, **characterised in that** a contact-breaking device (18) is provided between the manipulator (16) of the robot and the mounting element (2), in particular for moving the laser hybrid welding head (1) under the action of a force.

6. Apparatus as claimed in one of the preceding claims, **characterised in that** the elements of the welding torch (5) consist of a torch body (19) and a fixing body (20).

7. Apparatus as claimed in one of the preceding claims, **characterised in that** a contact-breaking device (22) is provided between the torch body (19) and the fixing body (20), in particular for moving the torch body (19) under the action of a force.

8. Apparatus as claimed in one of the preceding claims, **characterised in that** a cross jet guide device (7) is attached to an end face (23) of the mounting element (2), in particular the section (11).

9. Apparatus as claimed in one of the preceding claims, **characterised in that** the cross jet guide device (7) is disposed at a distance (28) underneath the laser (4) and the laser optics or the optical focussing unit.

10. Apparatus as claimed in one of the preceding claims, **characterised in that** the cross jet guide device (7) has an orifice (30) through which a laser beam (31) of the laser (4) is beamed.

11. Apparatus as claimed in one of the preceding claims, **characterised in that** the laser (4) and the laser optics or the optical focussing unit are disposed at one side of the mounting element (2) and the welding torch (5) is disposed at another, preferably oppositely lying, side of the mounting element (2).

12. Apparatus as claimed in one of the preceding claims, **characterised in that** the welding torch (5) is a MIG/MAG welding torch for running a MIG/MAG welding process.

13. Apparatus as claimed in one of the preceding claims, **characterised in that** the cross jet guide device (7) in which a cross jet (8) is generated has a housing (27), which is designed to at least partially surround or shield the laser (4) and the laser optics or the optical focussing unit.

## Revendications

1. Dispositif, en particulier tête de soudage hybride à laser (1), pour un processus de soudage hybride à laser, dans lequel sont disposés à au moins un élément de montage (2) un laser (4) respectivement une optique laser et une unité de focalisation optique et des éléments d'un chalumeau (5) pour un processus de soudage à l'arc (6) et/ou un dispositif d'amenée pour un fil d'apport (21), ainsi qu'un dispositif pour former un jet croisé (8), qui est relié par au moins un conduit d'amenée (9) et un conduit d'évacuation (10) à une installation d'alimentation en air comprimé, **caractérisé en ce que** le conduit d'amenée (9)et le conduit d'évacuation (10) de l'air comprimé pour le jet croisé (8) sont disposés entre le laser (4) respectivement l'optique laser ou l'unité de focalisation optique sur l'un, et les éléments du chalumeau (5) ou du dispositif d'amenée du fil d'apport (21) sur l'autre.

2. Dispositif selon la revendication 1, **caractérisé en ce que** l'élément de montage (2) est formé par un profilé (11) avec des rainures de fixation (12) pour les composants de la tête de soudage hybride à laser (1).

3. Dispositif selon la revendication 1 ou 2, **caractérisé en ce que** l'élément de montage (2) est réalisé de façon que celui-ci présente un canal traversant (13), s'étendant au centre, qui forme de préférence le conduit d'évacuation (10) et que sont disposés, parallèlement à ce canal (13) deux autres canaux (14, 15) qui forment de préférence les conduits d'amenée (9).

4. Dispositif selon l'une des revendications précédentes, **caractérisé en ce que** l'élément de montage (2) est relié à un manipulateur (16) d'un robot par un dispositif de fixation (17).

5. Dispositif selon l'une des revendications précédentes, **caractérisé en ce qu'**un dispositif de coupure (18), en particulier pour une déviation de la tête de soudage hybride à laser (1) sous l'effet d'une force, est disposé entre le manipulateur (16) du robot et l'élément de montage (2).

6. Dispositif selon l'une des revendications précédentes, **caractérisé en ce que** les éléments du chalumeau (5) sont formés par un corps de brûleur (19) et un corps de fixation (20).

7. Dispositif selon l'une des revendications précédentes, **caractérisé en ce qu'**un dispositif de coupure (22), en particulier pour une déviation du corps de brûleur (19) sous l'effet d'une force, est disposé entre le corps de brûleur (19) et le corps de fixation (20).

8. Dispositif selon l'une des revendications précédentes, **caractérisé en ce qu'**un dispositif de guidage de jet croisé (7) est fixé à une face frontale (23) de l'élément de montage (2), en particulier du profilé (11).

9. Dispositif selon l'une des revendications précédentes, **caractérisé en ce que** le dispositif de guidage du jet croisé (7)est disposé à une distance (28) en dessous du laser (4) respectivement de l'optique laser ou de l'unité de focalisation optique.

10. Dispositif selon l'une des revendications précédentes, **caractérisé en ce que** le dispositif de guidage du jet croisé (7) présente une ouverture (30) à travers laquelle passe un rayon laser (31) du laser (4).

11. Dispositif selon l'une des revendications précédentes, **caractérisé en ce qu'**est disposé sur un côté de l'élément de montage (2) le laser (4) respectivement l'optique laser ou l'unité de focalisation optique et sur l'autre côté, en particulier opposé, de l'élément de montage (2) le chalumeau (5).

12. Dispositif selon l'une des revendications précédentes, **caractérisé en ce que** le chalumeau (5) est formé par un chalumeau MIG/MAG pour exécuter un processus de soudage MIG/MAG.

13. Dispositif selon l'une des revendications précédentes, **caractérisé en ce que** le dispositif de guidage de jet croisé (7), dans lequel est réalisé un jet croisé (8), présente un boîtier (27) qui est réalisé de façon à entourer respectivement couvrir au moins partiellement le laser (4) respectivement l'optique laser ou l'unité de focalisation optique.
